# EUROPEAN PATENT APPLICATION

(11) **EP 1 982 753 A1**
(43) Date of publication of application: **22.10.2008**
(21) Application number: 07007939.7
(22) Date of filing: 19.04.2007
(51) Int. Cl.: B01D 17/028, B01D 17/02, B01D 45/08, C02F 1/40, E03F 5/16

(54) **Gravity separation vessel, baffle arranged in a gravity separation vessel and method of separating a liquid / gas mixture**

(71) Applicant: FMC Technologies C.V., 1076 EE Amsterdam (NL)
(72) Inventor: Menchaca Lobato, Arturo Ernesto, 6702 AC Wageningen (NL)
(74) Representative: Hylarides, Paul Jacques

(57) **Abstract**

The invention relates to a gravity separation apparatus for separating a mixture of gas and/or one or more liquids of different densities under the influence of the force of gravity, the apparatus comprising an elongated vessel including an inlet for input of the mixture to be separated, a gas outlet for the discharge of the separated gas and one or more liquid outlets for discharging the separated one or more liquids, wherein the vessel further comprises one or more perforated baffles, arranged in the interior space of the vessel, for distributing the mixture flowing through so as to provide a more even distribution of the mixture flowing downstream of the baffles, wherein the baffles are of an essentially concave shape.

## Description

The present invention relates to a gravity separation vessel and a method for separating a mixture of gas and/or one or more liquids of different densities. The invention more specifically relates to a baffle, arranged inside a gravity separation vessel, for distributing the mixture flowing in the vessel.

For separating a mixture of single phase liquids of different densities or multiphase mixtures of gas and one or more liquids of different densities, for instance in the field of the production of oil and natural gas, gravity separation vessels are employed. For instance, in a mixture of gas and two liquids of different density the result of the action of the force of gravity is that the gas is collected at the top of the gravity separation vessel, while the liquid mixture is collected at the bottom of the vessel. The liquid having a relatively low density remains floating on the liquid having a relatively high density.

The mixture entering the gravity separation vessel is first guided through one or more inlet devices. With such inlet devices a pre-treatment can be carried out on the supplied mixture before the mixture is further separated in the above-described manner. The most important functions of the inlet device(s) are the reduction of the impact of the inlet flow so that the degree of separation inside the gravity separation vessel can be maximized. This is accomplished by preventing liquid shattering whereby small liquid droplets could result which would make the separation process more difficult, the prevention of so-called "foaming", or the occurrence of foam and to provide an initial distribution of the mixture within the vessel.

An example of a gravity separation vessel having an inlet device comprising a number of inlet cyclones is described in WO 00/74815 A2, the disclosure of which is incorporated herein by reference. The inlet device separates to some extent gas from the gas/liquid mixture and discharges the separated part of the gas via one or more gas outlets into the upper part of the interior space of the vessel. The remaining part of the mixture is discharged from the inlet device into the lower part of the interior space of the gravity separation vessel.

In order to achieve an efficient gas / liquid and liquid / liquid separation in horizontal gravity separation vessels it is important to have a quiescent flow regime along the length of the vessel. This is accomplished by arranging one or more perforated flat plates or baffles inside the vessel. The flat baffles can be installed singularly, in a double arrangement and both full and part diameter depending upon the intended duty.

Downstream of the baffles one or more different separation elements are sometimes provided in order to provide for a further enhancement of the liquid/liquid separation process. For instance, plate pack coalescers may be used in the liquid section of the gravity separation vessel in order to optimise the degree of liquid / liquid separation. The operating principle of parallel plate separators relies on the fact that the flow through the narrowly spaced plates will be less turbulent. Since the distance the dispersed phases have to travel to the interface is much smaller, smaller droplets will be separated.

In order for the further separation elements to provide a good separation of the mixture, the flow of the mixture should be more or less uniformly distributed across (a part of) the cross-section of the vessel. As mentioned above, this can be accomplished by placing one or more flat transverse baffles between the inlet device and the further separation elements.

However, due to the pressure drop over the flat baffles caused by the mixture flow, separate strengthening beams or similar means need to be provided to increase the strength of the assembly and therefore prevent the baffles from collapsing. The beams need to be attached to the baffles and the wall of the vessel in order to give the baffles sufficient structural strength to withstand the pressure drops caused by the mixture flow. This makes the construction of the baffle heavy and complicated.

Furthermore, the known flat baffles have the disadvantage that the velocity distribution of the mixture flow downstream of the baffle is not optimal due to the impact of the strengthening beams referred to above. In other words, the mixture downstream of the baffle is far from being evenly distributed. This has a negative influence on the separation process within the vessel. As a consequence, the overall separation efficiency of the gravity separation vessel will deteriorate.

It is an object of the present invention to obviate the above-mentioned drawbacks of the prior art and to provide a simple and strong structure that can withstand the forces exerted thereon by the mixture flow.

It is a further object of the invention to provide a gravity separation vessel wherein the separation efficiency of the further separation elements is increased.

It is a still further object of the invention to provide a gravity separation vessel with an improved overall separation efficiency.

According to the first aspect of the present invention a gravity separation vessel is provided for separating a mixture of gas and one or more liquids of different densities under the influence of the force of gravity, the apparatus comprising an elongated vessel including an inlet for input of the mixture to be separated, a gas outlet for the discharge of the separated gas and one or more liquid outlets for discharging the separated one or more liquids, wherein the vessel further comprises one or more perforated baffles, arranged in the interior space of the vessel, for distributing the mixture flowing through so as to provide a more even distribution of the mixture flowing downstream of the baffles, wherein the baffles are of an essentially concave shape.

The concave shape of the baffle has a positive effect on the downstream distribution of the mixture. The concave shape of the baffle also improves the structural strength so that the baffles can withstand higher pressure drops. In some embodiments the baffles do not need further support or strengthening means to give them the required strength, apart from the attachment of the baffle to the vessel wall at the circumferential edge.

Preferably the baffle(s) is(are) arranged in the vessel so that the concave side(s) thereof face(s) the upstream part of the vessel. In this way the baffle is able to withstand very high pressure drops of the mixture flowing in the "normal" flow direction. When the baffles are arranged in the reverse orientation, that is when the concave sides of the baffles face the downstream end of the vessel, the baffle can withstand also relatively higher pressure drops, albeit the buckling pressure drop at which the baffle will flip over is lower than in the preferred orientation.

By giving the baffle a concave shape, the mechanical strength may be improved to such extent, that the baffle is essentially self-supporting. This means that the usual support frames needed to provide the known baffle plates with necessary strength can be dispensed with.

In a further preferred embodiment the baffle comprises a circumferential edge part, the edge part being attached to the wall of the vessel. For mounting the baffle in the vessel a support frame is not needed, which not only makes the construction simpler, but also avoids any support frames to influence the flow distribution downstream of the baffle. If no support frame is needed or even if a relatively light-weight support frame is needed, the mixture flow will less likely be blocked and the baffle will distribute the flow more evenly.

Preferably the baffle is made of sheet material, for instance with a thickness between 2 and 8 mm. A sheet material baffle having a concave shape and having this thickness is sufficient to withstand the pressure differences present in gravity separation vessels used in the production of hydrocarbons.

In a further preferred embodiment the baffle is at least partially conical, with a cone angle (α) varying preferably between about 1 and 25 degrees. Tests have shown a considerable increase of the relative strength of the baffle in the "normal" flow direction when the cone angle is within this range. When the cone angle is between about 3 and 25 degrees, the relative strength of the baffle in the "reverse" flow direction is improved considerably. This may be for instance important in a gravity separation vessel mounted on a ship, wherein, depending on the surge of the sea, the mixture flow direction may alter from the "normal" direction to the "reverse" direction and vice versa. Usually, however, the elongated gravity separation vessel is arranged on a foundation and extends substantially horizontally, whereas the one or more baffles extend substantially vertically.

In a further preferred embodiment the apparatus comprises:
- one or more inlet devices, arranged inside the vessel and connected to the inlet so as to perform a first separation of the incoming mixture,
- one or more baffles, arranged downstream of the inlet devices, so as to at least partially distribute the mixture flows from the inlet devices;
- further separation means, arranged downstream of the baffles, for performing a further separation of the mixture.

The baffles are needed to optimise the distribution of the mixture along the length of the vessel in order to maximise the retention time of the mixture within the vessel and therefore provide a much improved separation of the mixture.

The hydraulic diameter of the perforations in the baffles is between about 2 and 200 mm.

According to another aspect of the present invention a method is provided of separating a mixture of gas and one or more liquids of different densities under the influence of the force of gravity, the method comprising:
- supplying the mixture to the inlet of a gravity separator;
- performing a first separation of the mixture by guiding the mixture through one or more inlet devices connected to the inlet of the separator;
- guiding one or more mixture portions from the inlet devices through one or more baffles, each baffle having an essentially concave shape, so as to distribute the mixture portions in the downstream section of the separator;
- performing a further separation of the mixture by guiding the distributed mixture portions through further separation means;
- discharging the separated gas from one or more gas outlets;
- discharging said one or more separated liquids from one or more liquid outlets.

As is discussed above the gravity separator as described herein may be used for separating a gas-liquid mixture (multiphase mixture) into a heavy fraction essentially containing liquid and a light fraction essentially containing gas, for example gas and oil, or for separating a (single phase) mixture of two or more liquids of different densities into heavy fractions of different density, or for a multiphase mixture of gas and at least two liquids of different density.

The separator may be used for separation of a mixture containing different liquids as well. When the mixture is a liquid-liquid mixture, the heavy fraction mainly contains a first liquid having a relatively high density, for instance water, and the light fraction mainly contains a second liquid having a relatively low density, for instance oil.

Further advantages, features and details of the present invention will be elucidated in the light of the following description of several preferred embodiments of the invention, with reference to the annexed drawings, in which:
Figure 1 shows a partly broken away view in perspective of a gravity separation vessel provided with a first and second preferred embodiment of a baffle according to the present invention;
Figure 2 is a front view of a known baffle and a graphical representation of the axial velocity downstream of the baffle;
Figure 3 shows the first embodiment of the baffle in more detail;
Figure 4 shows a support ring for attaching the baffle to the vessel wall;
Figure 5 is a graphical representation of the first embodiment of the baffle according to the invention and the axial velocity downstream of the baffle;
Figures 6-8 are graphical representations of the flow distribution as a function of height when the first embodiment of the present invention is used;
Figures 9 and 10 show respectively a front view of a baffle according to a second embodiment and the support lugs or gussets for attachment of the baffle to the vessel;
Figure 11 is a graphical representation of the axial velocity downstream of the baffle of figure 9;
Figures 12-14 are graphical representations of the velocity profile at respectively 250 mm, 500 mm and 750 mm above the vessel bottom when a baffle according to the second embodiment is employed;
Figure 15 is a schematic cross-section of an embodiment of the baffle in general.
Figures 16 and 17 are plots of the relative strength of the baffle as function of the cone angle in a normal flow direction and in a reverse flow direction respectively.

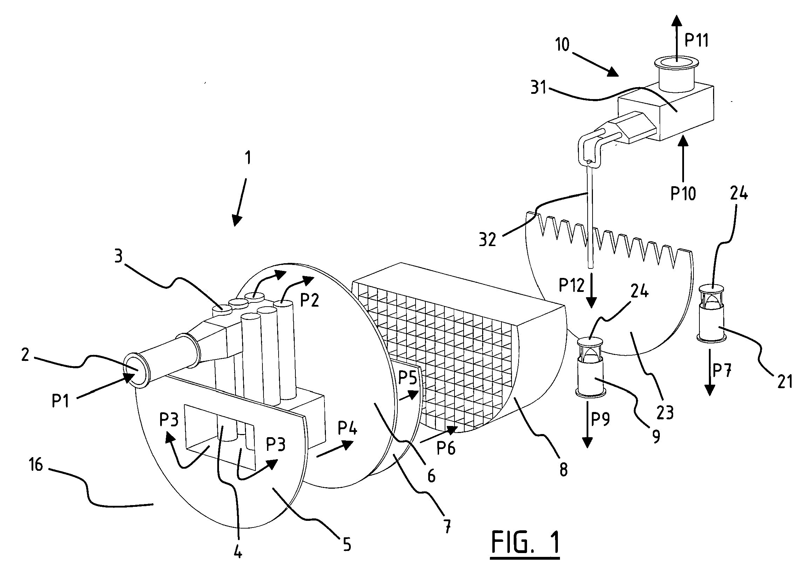

Figure 1 shows a horizontal gravity separation vessel 1 typically used in the offshore industry for separating multiphase mixtures, for instance a mixture of gas, oil and water. Via a supply channel of inlet 2 a mixture of, for instance, gas and liquid is supplied (direction P₁), for instance from an oil/gas pipeline (not shown), and enters the vessel 1.

The mixture is separated under the influence of gravity. The mixture is separated into a mixture part with a high gas content (light fraction) and a mixture part with a low gas content (heavy fraction). Separation of the heavy fraction (water and oil) moreover occurs in a fraction with substantially water and a fraction with substantially oil, wherein the lighter oil remains floating on the heavier water. The further separation of the layers of water and oil takes place in a manner known to the person skilled in this area, and in order to simplify the description is not further explained here.

In order to improve the operation of such (gravity) separation vessels, there are, as already stated above, inlet devices known in a number of applications in the oil and gas-processing industry which carry out a pretreatment on the supplied mixture before further separating the mixture in known manner. The most important functions of the inlet device(s) are the reduction of the impact of the inlet flow so that the degree of separation inside the gravity separation vessel can be maximized. This is accomplished by preventing liquid shattering whereby small liquid droplets could result which would make the separation process more difficult, the prevention of so-called "foaming", or the occurrence of foam and to provide an initial distribution of the mixture within the vessel.

A particular embodiment of inlet devices, as shown in figure 1, is formed by so-called inlet cyclones 3 wherein the liquids and gases undergo a first separation under the influence of centrifugal forces generated in the inlet cyclone. In WO 00/74815 A2 the separation principle of an inlet cyclone is described extensively and therefore a further description of the separation of the incoming mixture into a light (gas) fraction and a heavy (liquid) fraction can be omitted here. The result of the separation is that the heavy fraction flows from the underside through an exit opening to the outside (direction P₃, figure 1) and enters a lower part of the gravity separation vessel 1 for a further separating treatment. The pressurized liquid mixture flow changes direction, as is shown in figure 1 (P₃). A more uniform velocity distribution of the heavy fraction is then effected by arranging a perforated plate or baffle 5 inside the vessel 1, which enhances the separation of the liquid mixture, for instance the separation of oil in water into a layer of water with oil floating thereon. The light fraction on the other hand is driven in the direction P₂ (figure 1) and is subsequently discharged in the upper part of vessel 1.

The light fraction and heavy fraction travel in direction P₄ towards perforated plates or baffles 6 and 7, arranged one behind the other. Baffle 6 extends over substantially the entire cross-section of the vessel 1 and provides a more uniform distribution of both the heavy and light fraction downstream thereof. The heavy fraction travelling in direction P₄ passes a further baffle 7 that only covers the lower part of the vessel 1. Baffle 7 further distributes the heavy fraction, so that an improved separation efficiency can be achieved by the further separator element 8. The further separator element 8 is arranged downstream (P₅) of the baffle 7 and downstream (P₆) of another baffle. In the embodiment shown in figure 1, the separator element 8 is a plate pack coalescer wherein the relatively heavy liquid(s), for instance water, is separated from the relatively light liquid(s), for instance oil.

Eventually the light fraction, i.e. the gas, enters (P₁₀) a number of outlet cyclones inside a cyclone box 31. The outlet cyclones are preferably axial cyclones of the type as described in EP 1 154 862 A1, the disclosure of which is incorporated herein by reference. The cyclones provide for further separation of liquid from the gas flow. The liquid is discharged through a downcomer 32 and flows back (P₁₂, figure 1) into the lower part of the vessel 1. The gas is discharged (P₁₁, figure 1) through the gas outlet 10 provided in the top part of the vessel 1.

Furthermore, the relatively light liquid floating on top of the relatively heavy liquid is separated by the weir plate 23. The flow of the heavy liquid is blocked by the weir plate 23 and the heavy liquid is discharged (P₉) through the heavy liquid outlet 9. The flow of the light liquid is essentially unblocked by the weir plate 23, so that the light liquid may be discharged (P₇) through the outlet 21. Both outlets 9 and 21 are provided with vortex breakers 24.

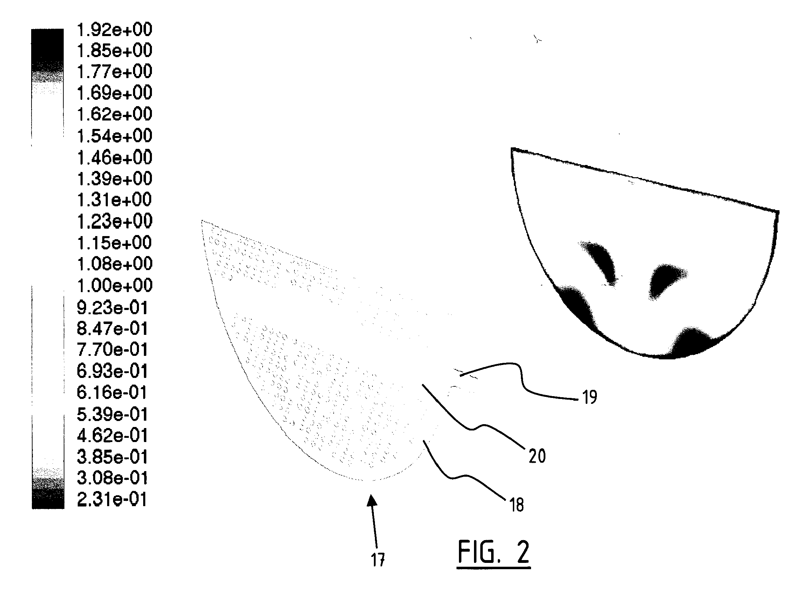

Figure 2 shows an example of a baffle according to the prior art. Baffle 17 consists of a perforated flat plate 18. The perforated plate 18 is arranged in a plane in the X-Y-plane, that is perpendicularly to the axial direction (Z-direction) of the gravity separation vessel 1. The plate is provided with a large number of relatively small perforations or openings for allowing the liquid (S) and/or gas (G) impinging on the front surface of the baffle to pass through.

As a result of the pressure drops present through these baffles inside a gravity separation vessel, the flat plate 17 is to be supported at the backside thereof by one or more supporting beams 19. Shown is a support beam 19, whose cross section is commonly U-shaped. However, numerous other types of support beams and cross-sections may be used.

The circumferential edge of baffle 17 and the outer ends of the support beams are attached to the wall 16 of the vessel, for instance by bolting the beams to the vessel wall.

The construction of baffle 17 with one or more support beams is relatively heavy and complicated. Since weight, reliability and ease of installation are important factors in equipment used for the production of natural oil and gas, the known baffle has a number of important drawbacks.

Furthermore at the position of the support beam 19 no perforations are present in the baffle. In other words, the baffle has a strip-like area 20 that prevents the passage of the incoming mixture. This area 20 disturbs the distribution of the mixture downstream of the baffle. This is indicated in the graphical representation at the right hand side of figure 2. Shown is an image representing the axial velocity downstream of the baffle, at a predefined distance of about 2000 mm. In the CFD simulation, the feed condition to the baffle was an evenly distributed flow with a velocity of 1 m/s. The velocity profile downstream of the baffle shows a peak velocity of about 1,92 m/s and the flow, which at the upstream side was evenly distributed, is no longer so at the downstream side of the baffle. This maldistribution of the flow downstream of the baffle has a negative effect on the separation efficiency that can be achieved by the gravity separation vessel. More specifically, the maldistribution reduces the separation efficiency of any separation equipment situated downstream of the baffle, for instance a plate pack coalescer 8 shown in figure 1.

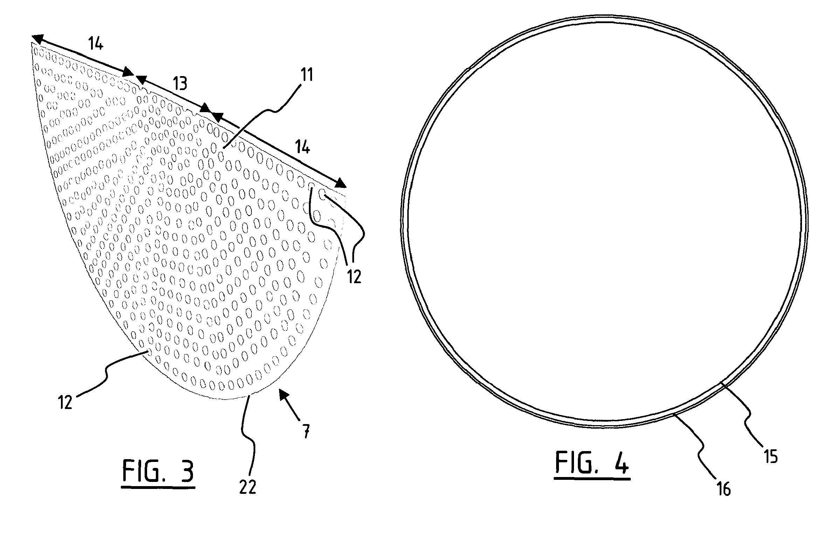

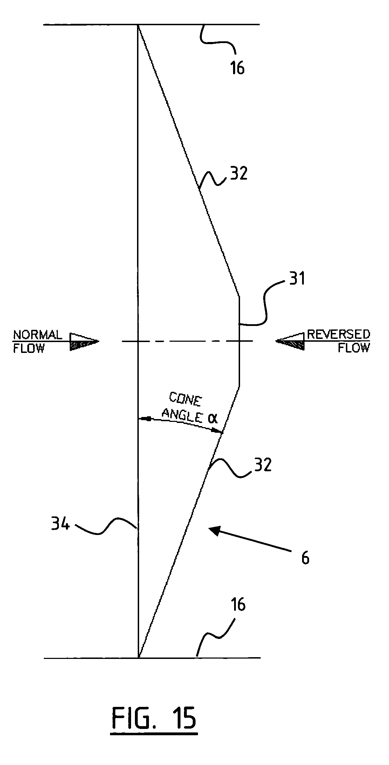

Figures 3 and 4 show a first embodiment of the baffle 7 according to the present invention. The baffle has in cross-section a curved shape (cf. figure 15) and is provided with a large number of relatively small perforations 12. In the shown embodiment the baffle 7 has a generally conical shape.

Herein a cone is a three dimensional geometric shape, more specifically it is the locus of all line segments between a simply connected region of a plane (the base) and a point (the apex) outside the plane. Cones may have a base of any shape and connect to an apex at any point outside the plane of the base. If the apex is located at right angle to the center of the base (i.e. a line joining the two is at right angles to the base plane), the cone is said to be a "right cone". Otherwise, it is called an "oblique cone". A cone with a circular or elliptical base is called a circular cone or elliptical cone, respectively. If the base is a polygon, the cone is a pyramid. The line segments of the polygon may be straight line segments. However, in a preferred embodiment the line segments of the polygon forming the base of the cone are curved, as will be explained later. In other preferred embodiments the baffle is a cone with its apex cut off by a plane substantially parallel to its base. This shape is referred to as a truncated cone or frustrum.

The term "generally conical" herein is intented to encompass any of the above-discussed shapes of a cone. Moreover, if a baffle is said to be "generally conical", it means that at least an essential part of the baffle has a (truncated) conical shape.

In a preferred embodiment the baffle has the shape of a truncated pyramid, the base of which defines slightly curved line segments. This pyramid-like baffle is less expensive to manufacture than a "perfect" cone having a circular or oval base, since use can be made of readily available sheet material. The pyramid-like shape can be made without any welded parts, whereas the cone in practice needs welding.

An example of a generally conical shape is given in figures 3 and 15. In these figures a truncated cone, more specifically a truncated pyramid, is depicted, i.e. a cone of which the apex or top 13 is flat and the remaining part 14 surrounding the top portion has a conical shape. In the shown embodiment the flat portion 13 is detachable from the remaining part of the baffle. In other embodiments (not shown) the flat portion 13 may be an integral part of the conical part of the baffle.

Due to its (truncated) conical shape, the baffle 7 can withstand higher pressure drops than a similar flat baffle. Tests have shown a considerable increase of the maximum pressure a baffle can withstand before being structurally damaged. Table 1 below shows the maximum allowable pressure drops of a full diameter sheet metal baffle in a vessel having an internal diameter of 2 meter, the pressures as function of the plate thickness and the cone angle (α). The pressure drop limitations represent the point at which the stress in the material reaches two thirds of the yield strength of SS 316L at room temperature in addition to a joint efficiency of 50% at the bolted flanges. In other words, when the maximum stress in the material is about 57 MPa. The baffle is made of stainless steel. More specifically, the properties of SS 316L have been used since this is the material most commonly used in these applications.

**Table I. Maximum allowable pressure in case of a gravity separation vessel with a diameter of 2 m and a full diameter baffle in the normal flow direction.**

| thickness [mm] | flat plat plate [Pa] | Conical plate **α** = 5° [Pa] | conical plate **α** = 10° [Pa] | conical plate, **α** = 15° [Pa] |
|---|---|---|---|---|
| 2 | 340 | 4200 | 4600 | 4700 |
| 3 | 750 | 7600 | 9800 | 10200 |
| 4 | 1350 | 11500 | 16500 | 17500 |
| 5 | 2100 | 15500 | 23500 | 27000 |

¹ The maximum allowable pressure drop over the cone-shaped baffle is sufficiently high so that additional support means, such as for instance one or more beams, can be dispensed with. The cone shaped baffle can therefore simply be attached to the wall 16 of the vessel 1 by a ring 15 (figure 4). Metal ring 15 is at one hand attached to the wall 16 of the vessel and on the other hand to the circumferential edge 22 of the baffle 7.
¹ Without support beam(s)

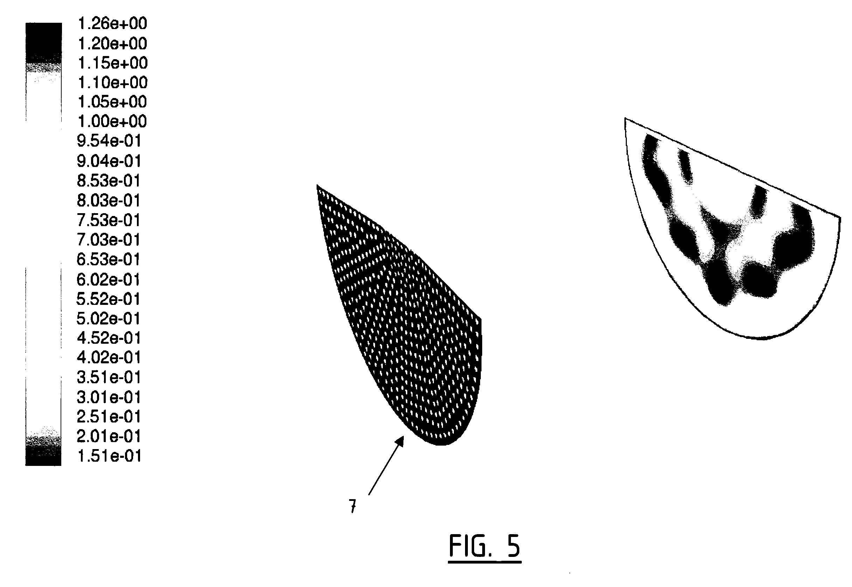

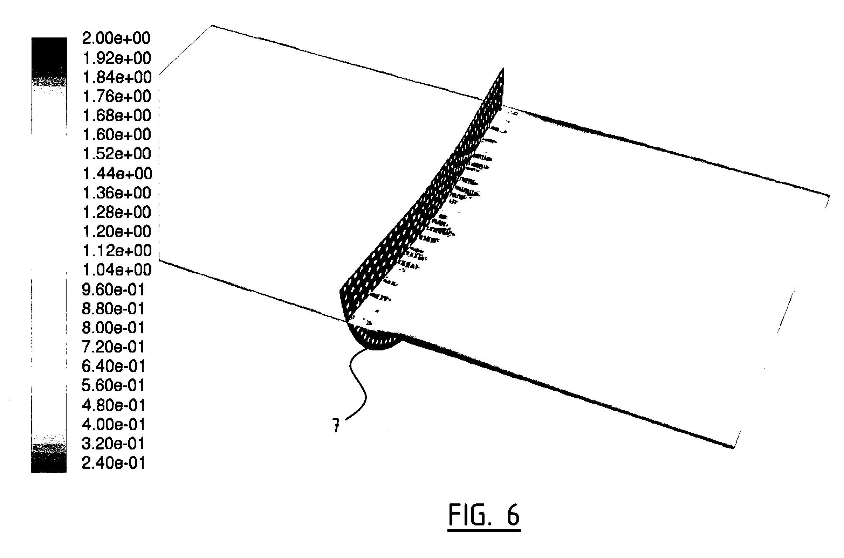

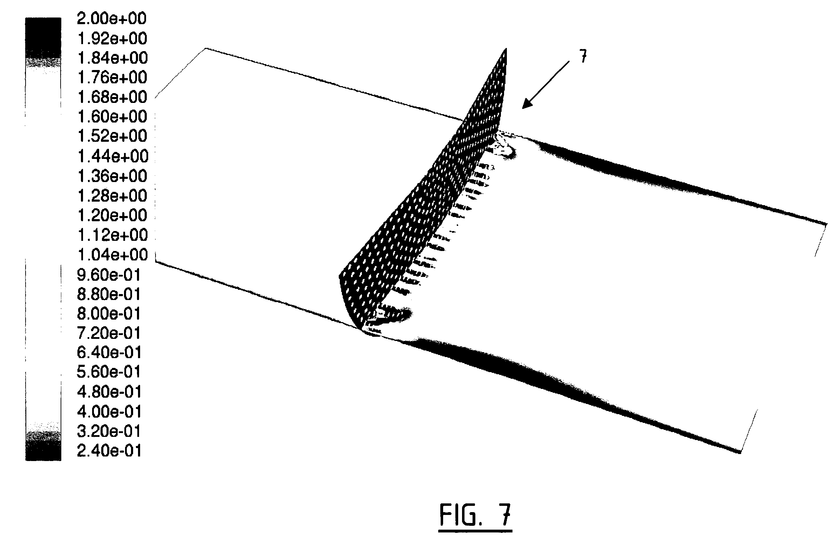

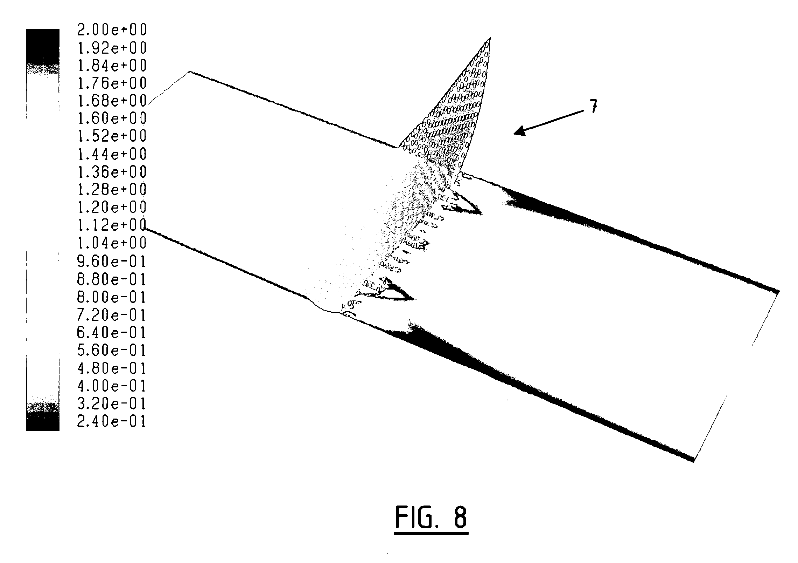

The effect of using a conical baffle is shown in figure 5. Shown is the baffle 7 and an image of the axial velocity downstream of the baffle. The feed condition to the baffle was an evenly distributed flow with a velocity of 1 m/s. The outlet profile shows a peak velocity of less than 1,26 m/s, with a distribution much improved over the distribution of the flat baffle shown in figure 2. The effects of using a conical baffle are also shown in figures 6-8. These images show the velocity distribution as a function of the height above the bottom of the vessel 1. Figure 6 shows the velocity profile at 750 millimetres above the vessel bottom, figure 7 the velocity profile at 500 millimetres above the vessel bottom and figure 8 the velocity profile at 250 millimetres above the vessel bottom. Again the distribution is much improved compared to the flat baffle.

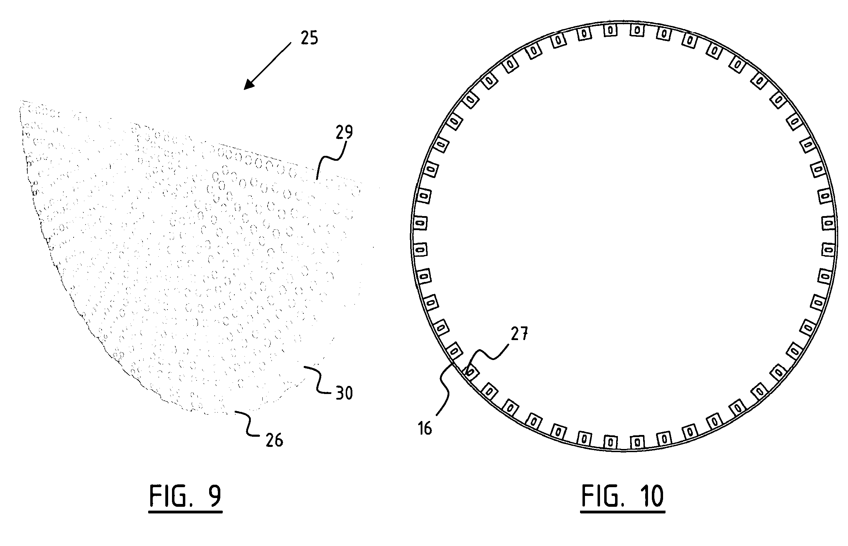

Figure 9 shows a front view of a second embodiment of the baffle 25. Figure 10 shows the support lugs or gussets 27 used to attach the baffle 25 to the wall 16 of the vessel. Instead of using a circular or half circular ring the present embodiment of the baffle is attached to the wall 16 of the vessel using a large number of metal lugs 27 extending from the inner surface of the wall 16. Lugs 27 can each be attached to attachment elements 26 provided at the circumferential edge of the baffle 25, for instance by bolting the lugs 27 to the attachment elements 26. An advantage of this embodiment of the baffle is that, besides the perforations 29 also present in the first embodiment, perforations 30 may be provided between consecutive attachment elements 26 / lugs 27 so that also close to the inner surface of the vessel wall 16 a relatively evenly distributed flow can be ensured.

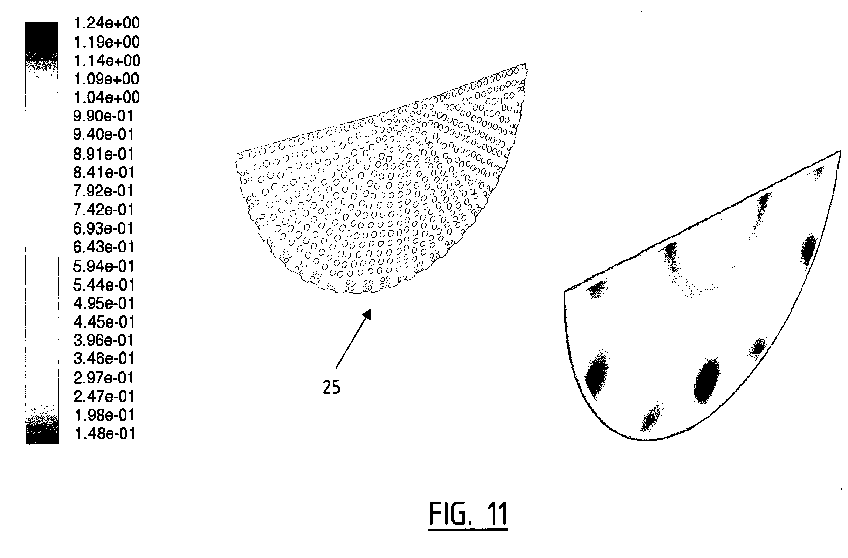

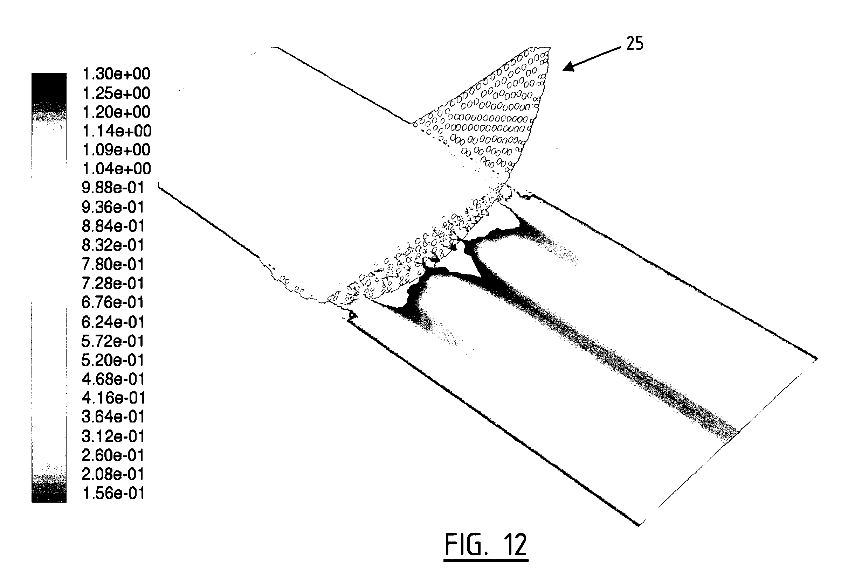

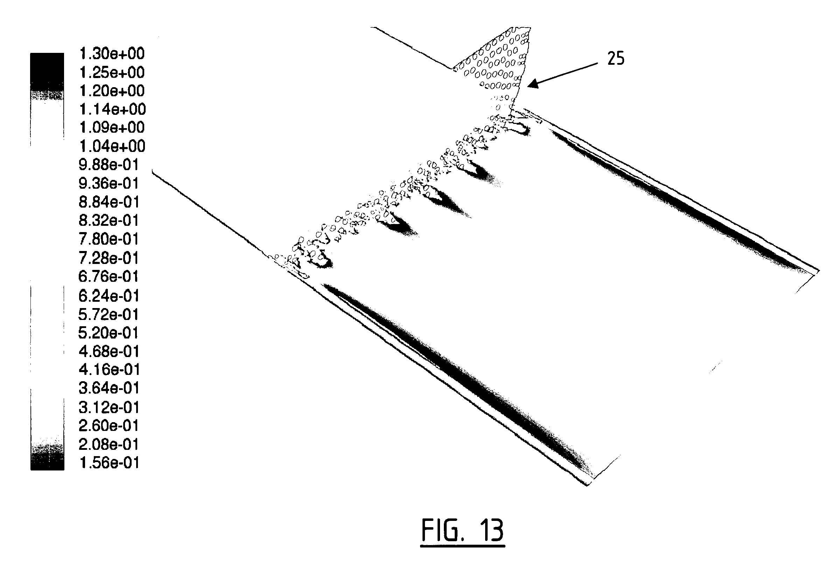

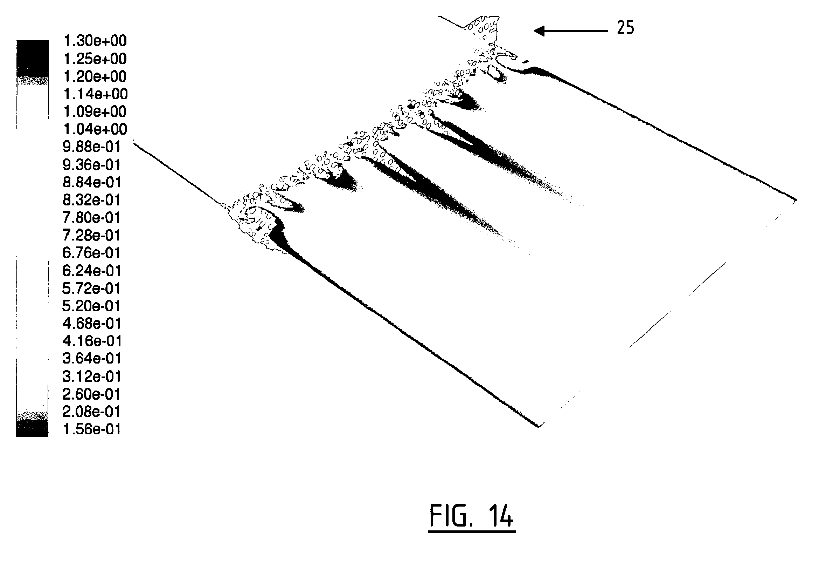

Figure 11 shows a back view of the baffle 25 and an image representing the axial velocity downstream of the baffle. Again the feed condition to the baffle was an evenly distributed flow with a velocity of 1 m/s. As can be derived from the image the outlet profile shows a peak velocity of 1,24 m/s with a distribution much improved over that of the flat baffle. Also figures 12-14 are representations of the velocity profile at respectively 250 mm, 500mm and 750 mm above the vessel bottom when a baffle according to the second embodiment is employed. As can be clearly derived from the figures, the distribution is much improved as compared to that of the flat baffle.

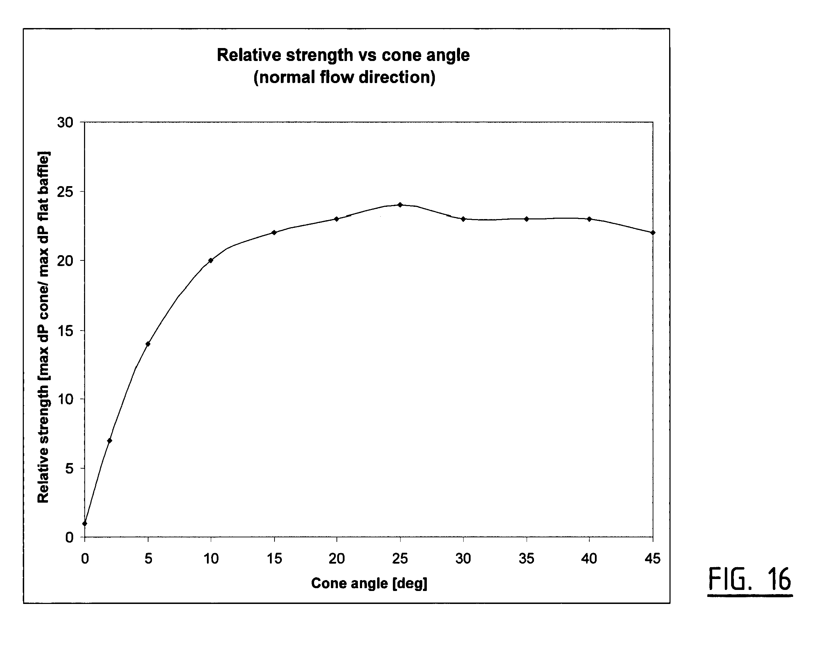

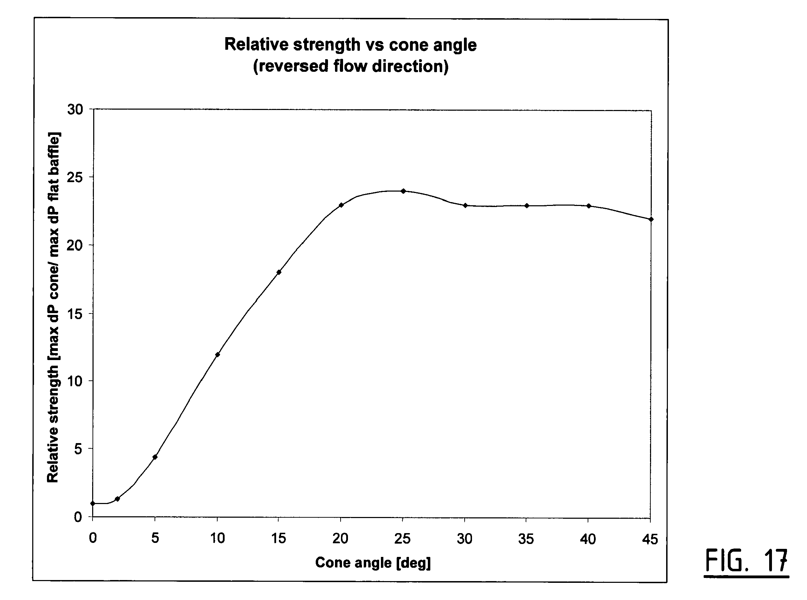

The influence of the cone angle (α) (cf. figure 15) on the relative strength of the baffle as compared to the strength of the flat baffle is shown in figures 16 and 17. Figure 16 shows the relative strength in case of a normal flow direction, that is from the inlet area of the vessel to the outlet area thereof, while figure 17 shows the relative strength in case of a reversed flow direction.

When the cone angle is between about 1 and 25 degrees, the relative strength of the cone shaped baffle is improved to a very large extent. Increasing the cone angle to values above 25 degrees does not improve the relative strength of the baffle, while reducing the cone angle to very small values reduces relative strength of the baffle. At very small angles the baffle may need an additional support.

The weight of a 10° conical baffle is about half the weight of a flat baffle working at the same conditions. The weight of each section is below 25 kg in practically all cases.

Moreover, even in very large baffles any of the sections of the assembly can fit in a crate of regular size without the need to split it in more parts. Another advantage is that welding has been avoided in the new design. The full diameter baffle is completely welding free.This makes manufacture easier, faster, installation more flexible.

The present invention is not limited to the above described preferred embodiments thereof. The rights applied for are defined by the following claims.

## Claims

1. Gravity separation apparatus for separating a mixture of gas and/or one or more liquids of different densities under the influence of the force of gravity, the apparatus comprising an elongated vessel including an inlet for input of the mixture to be separated, a gas outlet for the discharge of the separated gas and one or more liquid outlets for discharging the separated one or more liquids, wherein the vessel further comprises one or more perforated baffles, arranged in the interior space of the vessel, for distributing the mixture flowing through so as to provide a more even distribution of the mixture flowing downstream of the baffles, wherein the baffles are of an essentially concave shape.

2. Apparatus as claimed in claim 1, wherein the baffle is arranged in the vessel so that the concave side of the baffle faces the upstream part of the vessel.

3. Apparatus as claimed in claim 1, wherein the baffle is at least partially conical.

4. Apparatus as claimed in claim 1, wherein the baffle has the shape of a pyramid or truncated pyramid.

5. Apparatus as claimed in present claim 3 or 4, wherein the cone angle (α) is between about 1 and 25 degrees.

6. Apparatus as claimed in present claim 3, 4 or 5, wherein the cone angle (α) is between about 5 and 15 degrees.

7. Apparatus as claimed in any of the preceding claims, wherein a baffle extends over substantially the entire cross-section of the vessel.

8. Apparatus as claimed in any of the preceding claims, wherein a baffle extends over the lower part of the the cross-section of the vessel only.

9. Apparatus as claimed in any of the preceding claims, wherein the elongated gravity separation vessel is arranged substantially horizontally and the one or more baffles extend substantially vertically.

10. Apparatus as claimed in any of the preceding claims, wherein a baffle comprises a circumferential edge part, the edge part being attached to the wall of the vessel.

11. Apparatus as claimed in any of the preceding claims, wherein a baffle is essentially self-supporting.

12. Apparatus as claimed in any of the preceding claims, wherein a baffle is made of sheet material, preferably metal

13. Apparatus as claimed in any of the preceding claims, comprising:
- one or more inlet devices, arranged inside the vessel and connected to the inlet so as to perform a first separation of the incoming mixture,
- one or more baffles, arranged downstream of the inlet devices, so as to at least partially distribute the mixture flows from the inlet devices;
- further separation means, arranged downstream of the baffles, for performing a further separation of the mixture.

14. Apparatus as claimed in claim 13, wherein the further separation means comprise one or more parallel plate separators.

15. Apparatus as claimed in any of the preceding claims, wherein the diameter of the perforations is between about 2 and 200 mm.

16. Baffle as defined in any of the preceding claims.

17. Method of separating a mixture of gas and/or one or more liquids of different densities under the influence of the force of gravity, the method comprising:
- supplying the mixture to the inlet of a gravity separator, preferably a gravity separation apparatus as claimed in any of claims 1-15,
- performing a first separation of the mixture by guiding the mixture through one or more inlet devices connected to the inlet of the separator;
- guiding one or more mixture portions from the inlet devices through one or more baffles, each baffle having an essentially concave shape, so as to distribute the mixture portions in the downstream section of the separator;
- performing a further separation of the mixture by guiding the distributed mixture portions through further separation means;
- discharging the separated gas from one or more gas outlets;
- discharging one or more separated liquids from one or more liquid outlets.
